# FASCICULE DE BREVET EUROPEEN

(11) **EP 0 739 483 B1**
(45) Date de publication et mention de la délivrance du brevet: **09.09.1998**
(21) Numéro de dépôt: 95906368.6
(22) Date de dépôt: 05.01.1995
(51) Int. Cl.: G01N 30/12

(54) **DISPOSITIF D'INJECTION AUTOMATIQUE DE PRODUITS SOLUBILISES OU DILUES**
VORRICHTUNG ZUR AUTOMATISCHEN EINSPRITZUNG GELÖSTER ODER VERDÜNNTER PRODUKTE
DEVICE FOR AUTOMATICALLY INJECTING SOLUBILIZED OR DILUTED PRODUCTS

(30) Priorité: 14.01.1994 FR 9400388
(43) Date de publication de la demande: 30.10.1996
(73) Titulaire: Parsy, Philippe, 86000 Poitiers (FR); Lefebvre, Marc André, 86600 Lusignan (FR)
(72) Inventeur: Parsy, Philippe, 86000 Poitiers (FR); Lefebvre, Marc André, 86600 Lusignan (FR)
(74) Mandataire: Thébault, Jean-Louis
(86) Numéro de dépôt international: FR9500011
(87) Numéro de publication internationale: WO9519565

(56) Documents cités:
- EP-A- 0 027 601
- US-A- 3 759 107
- US-A- 5 009 591
- US-A- 5 065 614
- PATENT ABSTRACTS OF JAPAN vol. 7, no. 30 (P-173) (1175) 5 Février 1983 & JP,A,57 182 164 (KOTAKI SEISAKUSHO)
- JOURNAL OF HIGH RESOLUTION CHROMATOGRAPHY AND CHROMATOGRAPHY, vol.16, no.6, 16 Juin 1993, HEIDELBERG DE pages 353 - 357 ONISHI ET AL. 'an autosampler with a short transfer line for curie point pyrolisis capillary gas chromatography'
- ANALYTICAL CHEMISTRY, vol.44, no.1, Janvier 1972, COLUMBUS US pages 38 - 42 LEVY ET AL. 'temperature rise time and true pyrolysis temperature in pulse mode pyrolisis gas chromatography'

## Description

La présente invention a pour objet un dispositif d'injection automatique de produits solubilisés ou dilués.

En effet, les laboratoires d'analyses utilisent la chromatographie en phase gazeuse pour déterminer la composition et la présence de certains corps.

La chromatographie en phase gazeuse s'effectue à l'aide d'une colonne spécifique permettant la séparation des différents composés sur un substrat.

De tels dispositifs fonctionnent de façon automatique et, grâce à un traitement de l'information, présentent les résultats très rapidement et de façon parfaitement claire.

Aussi, de tels appareils d'analyse par chromatographie sont utilisés à des cadences très élevées.

Ces appareils très élaborés coûtent cher et leur amortissement ne peut s'effectuer que par une utilisation intensive.

Il faut donc, non seulement prévoir un appareil de chromatographie perfectionné, mais également un dispositif pour introduire l'échantillon de produit à analyser dans la colonne de chromatographie. On sait également que ces moyens d'introduction limitent le rendement des appareils de chromatographie.

Les moyens existants proposent une introduction automatisée au droit de la colonne de chromatographie d'un support, en l'occurrence une aiguille en verre, à l'extrémité de laquelle est déposée, préalablement à son introduction, une goutte du produit en phase liquide qu'il convient d'analyser.

Ce dépôt s'effectue à l'aide d'une seringue puis l'aiguille en verre est manoeuvrée manuellement.

Cette aiguille est placée dans une enceinte chauffée qui provoque la vaporisation des composés volatils du produit déposé à l'extrémité de l'aiguille.

On remarque une première contrainte liée à ce dispositif : il faut chauffer cette enceinte en permanence afin qu'elle soit à une température stabilisée. De plus, on constate au fur et à mesure des analyses, un encrassement de cette aiguille en verre, préjudiciable à la sensibilité d'analyse du dispositif.

Aussi, l'opérateur est conduit à nettoyer, voire à changer cette aiguille régulièrement, ce qui, outre les frais en matériel, induit des coûts de main d'oeuvre et des pertes d'exploitation dues à l'immobilisation des moyens d'analyse.

Par ailleurs, la phase manuelle de dépôt de l'échantillon est elle-même une contrainte non négligeable à prendre en compte lors de l'exploitation de ce type de moyen d'analyse. En effet, la reproductibilité est nécessairement altérée. La tâche n'est pas non plus motivante et le personnel doit être continuellement à proximité immédiate de ces moyens d'analyse pour pouvoir intervenir et placer l'échantillon de produit sur l'aiguille en verre dès que l'analyse précédente est terminée.

On connaît aussi une demande de brevet JP-A-57 182 164 au nom de KOTAKI SEISAKUSHO qui décrit un dispositif d'injection qui est orienté horizontalement. Des moyens mécaniques permettent de déplacer en translation le support d'échantillons, horizontalement. L'aiguille d'injection est orienté verticalement et se trouve perpendiculaire au trajet du support d'échantillons.

L'art antérieur peut être complété par le brevet US-A-5 009 591 qui concerne un pyrolyseur pour chromatographe en phase gazeuse qui comprend deux chambres, l'une de vaporisation, l'autre de pyrolyse.

La présente invention vise à automatiser en totalité le dépôt des échantillons, les moyens d'injection ainsi que leur nettoyage, de façon à permettre une utilisation continue de l'appareil d'analyse avec une meilleure reproductibilité, tout en libérant le personnel pour des tâches plus valorisantes.

A cet effet, le dispositif d'injection automatique de produits solubilisés ou dilués dans un solvant tel qu'il est prévu dans la présente invention, applicable à des colonnes d'analyse par chromatographie en phase gazeuse, se caractérise en ce qu'il comprend une chambre de concentration/calcination, une chambre de vaporisation orientées verticalement toutes les deux en liaison avec la colonne de chromatographie, un support d'échantillon, mobile de façon libre, sans liaison mécanique, entre une première position dans laquelle l'échantillon est dans la chambre de concentration/calcination et une seconde position dans laquelle l'échantillon est dans la chambre de vaporisation, ainsi qu'un système de balayage des deux chambres par un gaz vecteur, notamment par injection dudit gaz dans la chambre de concentration/calcination et la chambre de vaporisation et pas circulation ou par fermeture ou ouverture d'une soupape au droit de la chambre de vaporisation.

Selon une autre caractéristique de l'invention, le support d'échantillon comprend une embase mobile sur laquelle sont montés un filament chauffant et des alimentations électriques reliées à ce filament et les chambres de concentration/calcination et de vaporisation comprennent chacune des alimentations électriques prévues pour entrer en contact avec les alimentations électriques de l'embase lorsque ladite embase est dans l'une ou l'autre des chambres.

Selon un mode préférentiel de réalisation, les alimentations électriques sont réglables en puissance.

L'agencement du dispositif d'injection automatique selon l'invention est prévu en sorte que la chambre de concentration/calcination soit orientée verticalement de façon à recevoir à coulissement l'embase soumise à la gravité et mobile entre une position haute et une position basse. Cette chambre comprend également des moyens de blocage/déblocage de l'embase en position haute.

Une telle embase peut être un noyau de fer doux avec un électroaimant comme moyen de blocage/déblocage, cet électroaimant étant disposé en partie haute de la chambre de concentration/calcination.

Le système de balayage comprend un premier piquage d'entrée de gaz débouchant entre les chambres de concentration/calcination et de vaporisation, un second piquage de sortie de gaz débouchant hors de la chambre de concentration/calcination, ce second piquage comportant une première et une seconde voies, la première voie, à faible débit, étant équipée d'un ajutage et la seconde voie, à grand débit, étant équipée d'une électrovanne.

L'agencement du dispositif d'injection automatique de l'invention prévoit, selon un mode de réalisation, que le second piquage est situé immédiatement sous l'embase lorsque celle-ci est en position haute.

La chambre de concentration/calcination comprend également un orifice d'introduction d'aiguille en partie haute, au-dessus de l'embase lorsque celle-ci est en position haute et l'embase comprend un trou débouchant orienté verticalement, coaxial à l'orifice d'introduction, de façon à permettre le passage de l'aiguille de la seringue à travers l'embase et à autoriser ainsi l'accès au filament et la distribution de l'échantillon.

Selon un agencement particulier du second mode de réalisation, la chambre de concentration/calcination comprend une platine supérieure et une platine inférieure, deux embases supérieure et inférieure, deux tubes supérieur et inférieur, en matériau isolant, notamment en verre, deux électrodes métalliques supérieure et inférieure, comprenant chacune deux suralésages prévus pour recevoir d'une part les tubes supérieur et inférieur et d'autre part un tube intermédiaire, également en matériau isolant transparent, notamment en verre.

L'invention est décrite, ci-après, en regard des figures annexées qui représentent :
- la figure 1, une vue générale schématique en coupe d'un premier mode de réalisation du dispositif d'injection automatique selon l'invention, avec l'embase mobile en position haute,
- la figure 2, une vue de détail du dispositif d'injection de la figure 1 lorsque l'embase mobile est en position basse,
- la figure 3, qui comprend les étapes A, B, C et D, un synoptique de fonctionnement du dispositif d'injection automatique selon l'invention,
- la figure 4, une vue d'un second mode de réalisation du dispositif d'injection selon l'invention, et
- la figure 5, une vue de détail d'une variante de réalisation des électrodes par rapport aux tubes inférieur et intermédiaire du second mode de réalisation du dispositif représenté sur la figure 4.

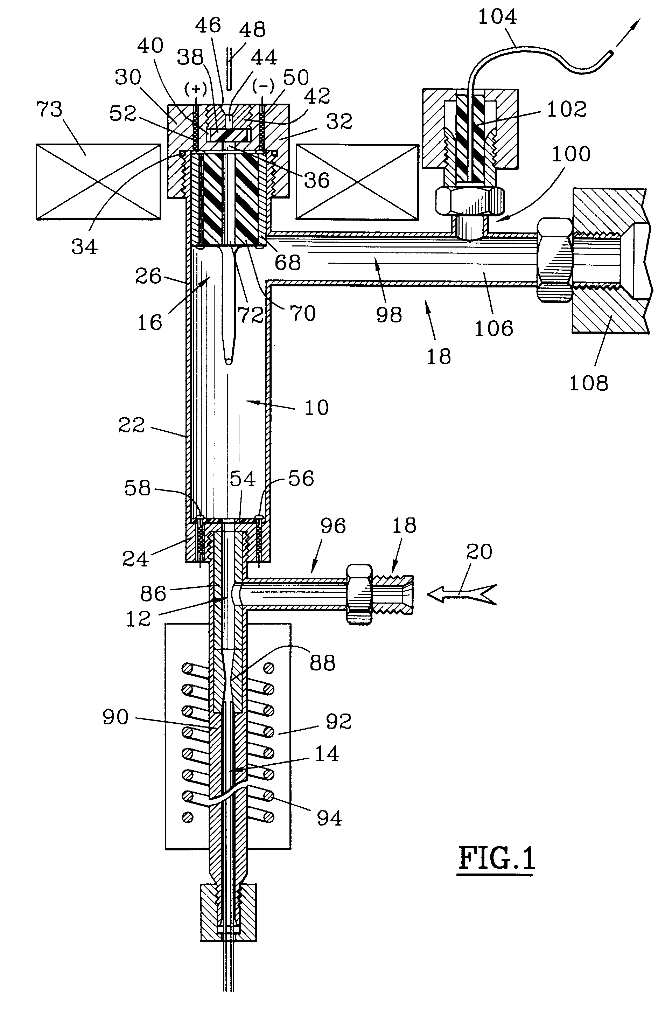

Sur la figure 1, on a représenté une chambre de concentration/calcination 10, une chambre de vaporisation 12 en liaison avec une colonne 14 de chromatographie en phase gazeuse, un support d'échantillon 16, mobile verticalement dans la chambre de concentration/calcination, ainsi qu'un système de balayage 18 des chambres de concentration/calcination et de vaporisation par un gaz vecteur 20.

La chambre de concentration/calcination 10 comprend un tube 22 cylindrique dont l'axe longitudinal est orienté verticalement et dont l'extrémité inférieure 24 est reliée à la chambre de vaporisation 12 et à la colonne de chromatographie 14, tandis que l'extrémité supérieure 26 comprend une tête d'injection 30.

Cette tête d'injection comprend un couvercle 32 vissé sur l'extrémité supérieure 26 avec un joint d'étanchéité 34.

Ce couvercle 32 comprend un trou d'injection 36, obturé par une rondelle 38 en matériau polymère, disposée dans un suralésage 40 taraudé et prévu pour recevoir un bouchon 42 vissé et lui-même équipé d'un conduit 44 débouchant sur la face supérieure de la rondelle 38 et muni à sa partie supérieure d'une forme en entonnoir 46 prévue pour recevoir et guider une aiguille 48 d'une seringue (non représentée).

Ce couvercle 32 est également équipé de deux alimentations électriques 50, 52 reliées aux pôles moins et plus d'un générateur, ces bornes faisant saillie sur la face intérieure du couvercle en contact direct avec l'intérieur de la chambre de concentration/calcination 10.

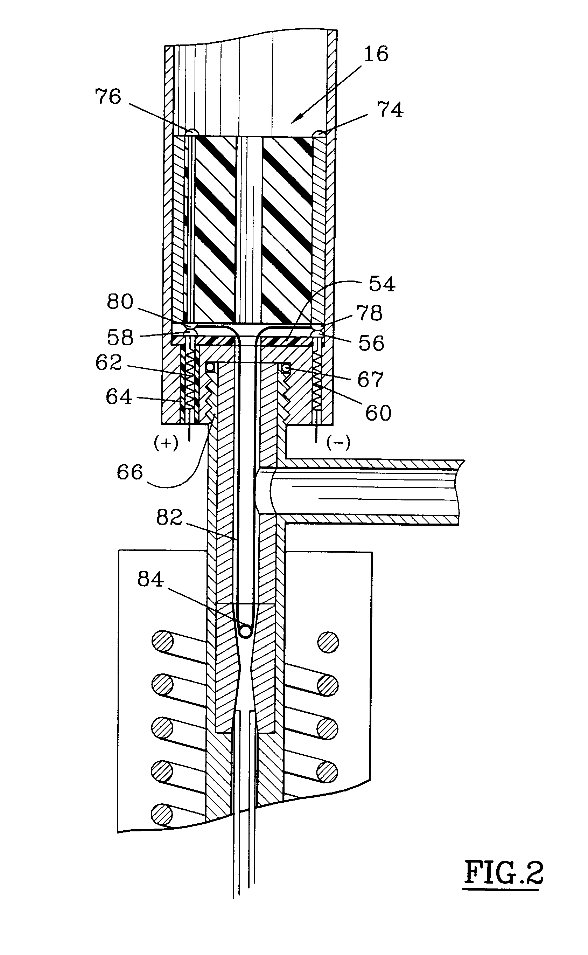

L'extrémité inférieure 24 de la chambre de concentration/calcination 10 comprend une rondelle d'isolation 54 à sa partie inférieure, traversée par deux bornes respectivement 56 et 58, reliées respectivement aux pôles moins et plus d'un générateur de courant, et montées sur des ressorts, travaillant à la compression, respectivement 60 et 62, voir figure 2.

Un manchon isolant 64 est prévu à la périphérie de l'alimentation 58 reliée au pôle positif du générateur de courant.

La partie inférieure 24 est vissée sur l'extrémité 66 de la chambre de vaporisation 12 et un joint 67 assure l'étanchéité.

Le support mobile d'échantillon 16 comprend une embase 68 métallique à l'intérieur de laquelle il est prévu un noyau isolant 70 muni d'un trou central 72, la forme extérieure de l'embase correspondant, au jeu près, à la forme de la chambre de concentration/calcination.

Cette embase, ainsi que cela est mieux visible sur la figure 2, est équipée de bornes électriques supérieures 74 et 76 et inférieures 78 et 80, reliées électriquement deux à deux.

Par ailleurs, un filament 82 est solidaire de cette embase, et plus particulièrement, ses extrémités sont solidaires des bornes électriques inférieures 78 et 80 de l'embase mobile.

Ce filament 82 a une forme de pointe et possède à son extrémité un enroulement 84.

Le support mobile d'échantillon 16 comprend en outre un électroaimant 73 disposé à la périphérie de l'extrémité supérieure 26 de la chambre de concentration/calcination 10, la puissance de cet électroaimant étant telle que les forces électromagnétiques générées retiennent de façon stable l'embase 68 en position haute à l'encontre de son propre poids.

La chambre de vaporisation 12 de type connu comprend essentiellement une section tubulaire 86 qui débouche avec un étranglement 88 dans la colonne de chromatographie 90, disposée dans une enceinte de chauffage 92 équipée de résistances 94.

Le système de balayage comprend un premier piquage 96 permettant l'entrée du gaz 20 dans la chambre de vaporisation 12 entre les chambres de concentration/calcination 10 et la colonne de chromatographie 90.

Ce système de balayage est complété par un second piquage 98 de sortie de gaz, débouchant hors de la chambre de concentration/calcination 10, immédiatement en-dessous de l'embase 68 lorsque celle-ci est en position haute telle que représentée sur la figure 1.

Ce second piquage 98 comprend une première voie 100 équipée d'un ajutage 102 débouchant dans un tube 104 et une seconde voie 106, à grand débit, équipée d'une électrovanne 108.

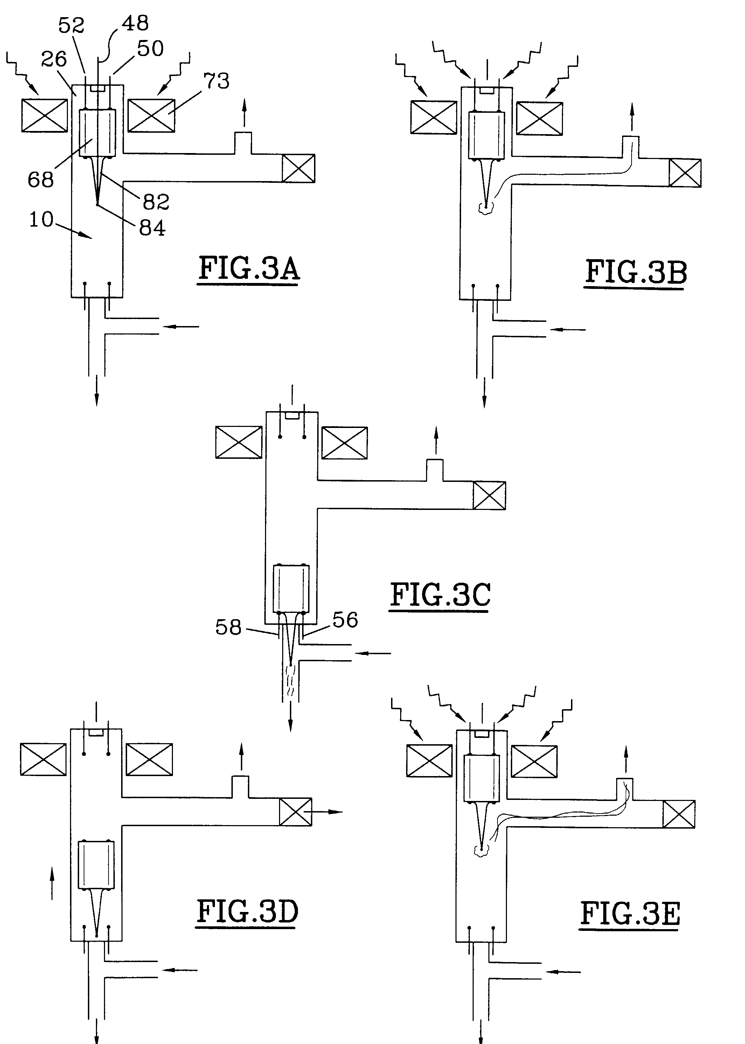

Le fonctionnement de ce premier mode de réalisation est décrit ci-après en détail notamment en regard du synoptique de la figure 3.

A l'étape A, l'électroaimant 73 est alimenté et maintient l'embase 68 en position haute, c'est-à-dire au droit de l'extrémité 26 de la chambre de concentration/calcination 10, les bornes supérieures 74 et 76 de cette embase coopérant avec les alimentations électriques 50 et 52 prévues dans le couvercle 32.

On remarque que la masse (borne négative) est réalisée par le matériau métallique qui constitue l'embase 68, si bien que les bornes supérieurs 74 et inférieure 78 sont au même potentiel.

Les bornes 76 et 80 sont également au même potentiel, positif cette fois, puisqu'elles sont reliées entre elles à travers le noyau isolant 70.

La colonne de chromatographie est en attente et le système de balayage est alimenté avec un débit relativement faible par le premier piquage 96, le gaz 20 circulant vers le haut à travers la chambre de concentration/calcination 10, puis à travers le second piquage 98, pour s'évacuer par la première voie 100 à travers l'ajutage 102 jusque dans le tuyau d'évacuation 104, l'électrovanne 108 étant fermée.

Ce gaz vecteur est choisi en adéquation avec le produit à analyser, un tel choix ne faisant pas partie de la présente invention et restant à la portée de l'homme de l'art.

L'électrovanne étant fermée, l'aiguille 48 d'une seringue, non représentée, est introduite à travers le trou 44 grâce à la forme en entonnoir 46 qui assure le guidage jusqu'à l'extrémité du filament 82, plus particulièrement jusqu'à la boucle 84 après avoir traversé la pastille d'étanchéité 38 en élastomère.

Cette introduction de l'aiguille d'une seringue peut être effectuée par un automate de type connu qui ne fait pas partie de l'invention.

Au cours de cette étape A, la seringue est actionnée pour déposer grâce à l'aiguille, une goutte de produit dilué ou en solution sur la boucle 84 du filament 82 auquel elle adhère grâce aux forces de capillarité.

A l'étape B, l'électroaimant 73 est toujours alimenté de façon à maintenir l'embase 68 en position haute, l'aiguille 48 ayant été retirée et le gaz vecteur étant maintenu à faible débit.

Si la tension de vapeur du solvant n'est pas assez faible à la température de travail, on fait passer un courant grâce aux alimentations électriques 50 et 52 à travers les bornes supérieures 74 et 76 qui elles-mêmes alimentent les bornes 78 et 80 et permettent une circulation de courant à travers le filament 82. L'intensité est calculée pour que, compte tenu de la section du filament, celui-ci s'élève en température et provoque l'évaporation du solvant, sans dégrader le produit porté.

Le courant de gaz vecteur entraîne le solvant par l'ajutage 102.

A l'étape C, l'alimentation de l'électroaimant 73 est coupée, ce qui provoque la descente par gravité de l'embase mobile 68 jusqu'à sa position basse et la pénétration du filament 82 dans la chambre de vaporisation 86, l'embase venant en appui sur les alimentations électriques 56 et 58, les ressorts 60 et 62 amortissant la chute de l'embase.

Les bornes électriques 78 et 80 de l'embase sont alors connectées aux alimentations 56 et 58.

La boucle 84 du filament 82 se trouve immédiatement au-dessus de la colonne de chromatographie dont les parois 110 sont symbolisées sur la figure 2.

Le courant de gaz vecteur 20 est orienté plus particulièrement vers la colonne de chromatographie, car l'embase et le filament encombrent la partie inférieure 24 de la chambre de concentration/calcination.

Les alimentations électriques 60 et 62 permettent de faire passer un courant à travers le filament 82 qui est porté à une température supérieure à celle qui a permis l'évaporation du solvant, de façon à provoquer la volatilisation du produit concentré et le fractionnement sur la phase de la colonne chromatographique.

La puissance de chauffe est générée et calculée en fonction du produit à analyser.

L'enceinte 92 est également chauffée de façon à atteindre la température adéquate en fonction de la nature des produits.

Les températures, les types de gaz vecteurs, les durées de chauffe et tous les paramètres de pilotage sont bien connus de l'homme de l'art qui pratique la chromatographie en phase gazeuse et sont couramment utilisés.

Il n'y a donc pas lieu de donner des exemples d'analyse.

Une fois la chromatographie effectuée, l'étape D permet de remettre l'embase en position haute, ceci grâce à l'ouverture de l'électrovanne 108 et par injection de gaz vecteur 20 avec un gros débit.

Ainsi, la circulation de gaz provoque le déplacement de l'embase 68 suivant la flèche de l'étape D en même temps qu'un balayage de l'ensemble de la chambre de vaporisation et de la chambre de concentration/calcination.

Lors de l'étape E, l'embase mobile, arrivée en position haute, est maintenue par l'électroaimant qui est à nouveau alimenté en énergie électrique.

Simultanément, lors de cette étape, l'électrovanne est fermée.

Lors de cette étape E qui correspond au nettoyage du filament 82, il est prévu d'alimenter par un courant électrique de forte puissance les bornes électriques 74 et 76, de façon à chauffer le filament à haute température et à provoquer la calcination des produits qui auraient pu subsister sur le filament.

Dans ce cas, la circulation du gaz vecteur est ramenée à faible débit, de façon à évacuer simplement les gaz générés par la calcination d'une très faible quantité de produit.

Le dispositif d'injection automatique est alors ramené dans sa position initiale représentée à l'étape A, prêt pour un nouveau cycle.

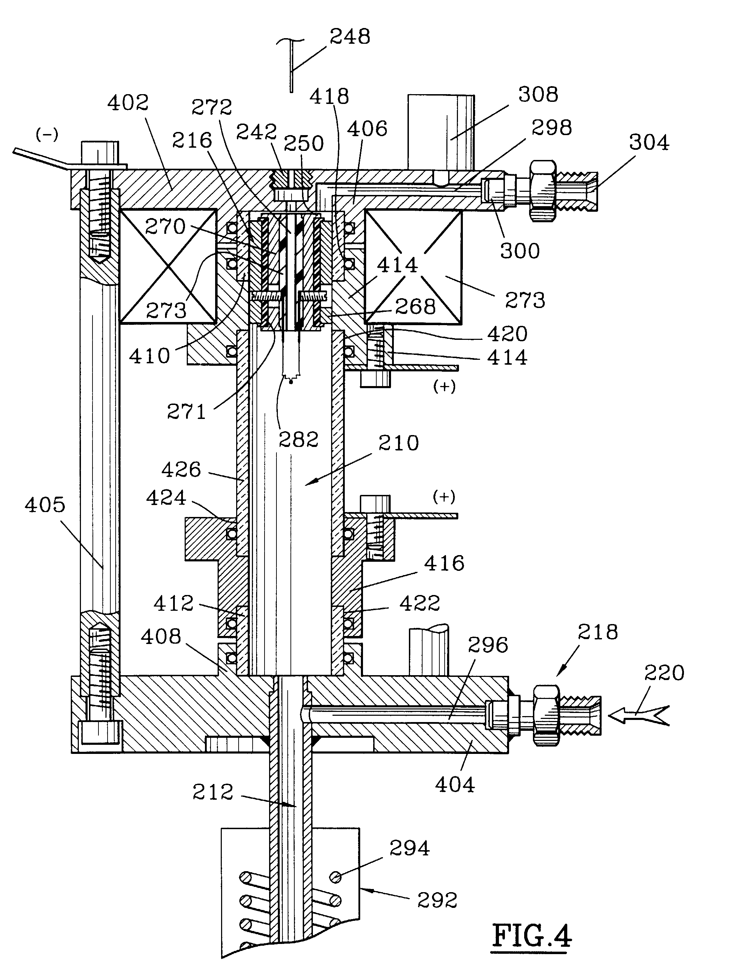

La présente invention propose également une variante de réalisation perfectionnée et industrielle qui est représentée sur la figure 4. Les éléments identiques à ceux du mode de réalisation principal sont référencés de la même façon en ajoutant 200.

Le bâti du dispositif comprend une platine supérieure 402 et une platine inférieure 404 reliées entre elles par des tirants 405. Chacune de ces platines comprend une embase cylindrique 406 et 408, venue d'usinage avec les platines et orientées en vis à vis. Ces deux embases 406 et 408 sont prévues pour recevoir la chambre de concentration/calcination 210.

Cette chambre comprend un tube supérieur 410 et un tube inférieur 412 qui coopèrent avec les embases 406 et 408 respectivement, par simple emboîtement, des joints toriques assurant l'étanchéité. De tels joints sont plus particulièrement choisis en matériau commercialisé sous la dénomination VITON.

Deux électrodes métalliques cylindriques supérieure 414 et inférieure 416 sont munies chacune de deux suralésages 418, 420 et 422, 424, les suralésages 418, 422 étant prévus pour venir s'emboîter respectivement sur le tube supérieur 410 et sur le tube inférieur 412.

Les deux autres suralésages 420 et 424 sont prévus pour recevoir par emboîtement les extrémités d'un tube intermédiaire 426. Des joints de même type que précédemment sont prévus pour assurer l'étanchéité.

Un électroaimant 273 est disposé en partie haute immédiatement au-dessous de la platine supérieure 402. La platine inférieure 404 est munie d'un conduit interne 296 pour l'alimentation en gaz vecteur 220. Il est prévu une chambre de vaporisation 212 fixée sur cette platine inférieure avec un four 292 périphérique, muni d'un ensemble de résistances 294, de façon identique au mode de réalisation de la figure 1.

La platine haute 402 est munie d'un conduit interne 298 relié à un tuyau 304 d'évacuation avec un ajutage 300 à débit préréglé pour une pression donnée.

Cette platine haute est également équipée d'une électrovanne 308, identique à l'électrovanne 108 du premier mode de réalisation, interposée sur le conduit interne 298.

Le support mobile d'échantillon 216 comprend quatre parties concentriques : une bague externe 268 en matériau conducteur, une première bague 271 en matériau isolant, une bague interne 270 en matériau conducteur, et une seconde bague 273 en matériau isolant munie d'un alésage central 272. Ces quatres bagues sont immobilisées en rotation les unes par rapport aux autres.

La seconde bague 273, en matériau isolant, comprend deux trous borgnes prévus pour recevoir les cosses serties sur les extrémités du fil composant le filament 282. Deux vis de blocage sont prévues pour visser dans deux taraudages respectivement ménagés, l'un dans la bague interne et, l'autre, dans la bague externe. La bague interne comprend un trou de passage de la vis coopérant avec la bague externe afin d'éviter tout contact électrique entre les deux bagues et la bague externe comprend un trou de passage de la vis coopérant avec la bague interne de façon à éviter également tout contact électrique entre les deux bagues.

La première bague en matériau isolant est munie de trous adaptés pour permettre le vissage des deux vis dans la bague interne.

Le diamètre externe du support mobile d'échantillon est égal, au jeu près de fonctionnement, au diamètre intérieur de la chambre de concentration/calcination. La forme cylindrique paraît la plus adaptée, la plus simple et la moins coûteuse.

On remarque que la bague interne comprend une partie supérieure et une partie inférieure en saillie 250 qui vient en contact avec la platine supérieure ou inférieure reliée à la masse (pôle négatif) et que la bague externe est en contact avec l'électrode supérieure ou inférieure (pôle positif) lorsque ledit support mobile d'échantillon est en position haute ou basse respectivement.

Un tel montage est attractif car il autorise une visualisation du filament à travers le tube intermédiaire en verre, ce qui autorise une surveillance immédiate des opérations automatiques d'injection. De plus, cela permet d'apprécier l'état de dégradation ou d'encrassement du filament à long terme. Les opérations de montage et démontage du dispositif sont aisées puisqu'il suffit, pour le démontage, de dévisser les tirants, de démonter les différents autres éléments et de faire l'inverse dans le cas du montage.

La maintenance est rendue plus aisée. On remarque plus particulièrement que le changement de filament est très simple puisqu'il suffit de démonter la platine supérieure pour accéder au support mobile d'échantillon, dévisser les deux vis partiellement pour retirer les cosses du filament défectueux, placer les cosses d'un filament de remplacement et de resserrer les vis. Après remise en place de la platine supérieure, le dispositif est de mouveau prêt à fonctionner

De plus, le support mobile d'échantillon est en contact de façon sûre avec l'électrode supérieure en position haute et avec l'électrode inférieure en position basse.

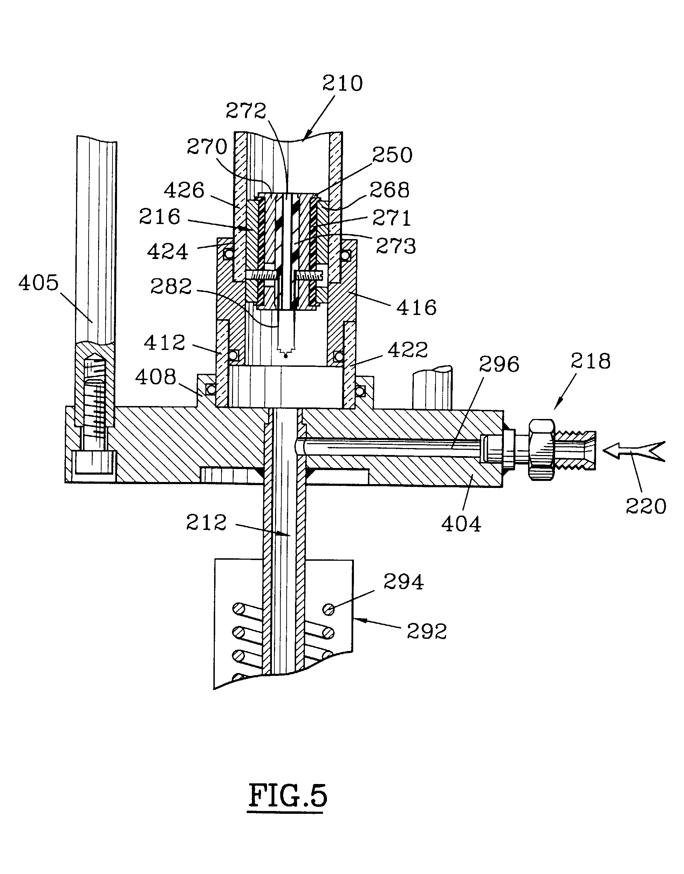

De façon à encore améliorer le contact de l'embase avec les électrodes, on peut prévoir un montage tel que représenté sur la figure 5 dans lequel l'électrode assure le guidage, en partie haute ou basse, en pénétrant par un lamage périphérique dans les tubes supérieur 410 et inférieur 412.

Dans ce second mode de réalisation, le fonctionnement est strictement identique au premier mode de réalisation. La variation contrôlée de la quantité de courant pour les différentes phases de concentration, vaporisation, calcination est conservée.

Le fait de reporter le piquage de sortie 298 au-dessus du support mobile d'échantillon est imposé par l'agencement industriel proposé car il est aisé de pourvoir la platine supérieure d'un conduit interne. Cela rend le dispositif plus compact et intégré.

Le gaz vecteur 220 introduit avec un gros débit conduit bien au soulèvement du support mobile d'échantillon de la position basse à la position haute. L'efficacité de l'effet d'ascenseur est même renforcé par le fait que le point de fuite au gaz vecteur se situe au dessus.

## Revendications

1. Dispositif d'injection automatique d'échantillons de produits solubilisés ou dilués dans un solvant, pour une colonne (14) d'analyse par chromatographie en phase gazeuse, caractérisé en ce qu'il comprend une chambre de concentration/calcination (10), une chambre de vaporisation (12) orientées verticalement toutes les deux en liaison avec la colonne (14) de chromatographie, un support (16) d'échantillon, mobile de façon libre, sans liaison mécanique, entre une première position dans laquelle l'échantillon est dans la chambre de concentration/calcination et une seconde position dans laquelle l'échantillon est dans la chambre de vaporisation, ainsi qu'un système de balayage (18) des deux chambres par un gaz vecteur, notamment par injection dudit gaz entre la chambre de concentration/calcination et la chambre de vaporisation et par circulation ou par fermeture ou ouverture d'une soupape au droit de la chambre de vaporisation.

2. Dispositif d'injection automatique selon la revendication 1, caractérisé en ce que le support d'échantillon comprend une embase mobile (28) sur laquelle sont montés un filament (82) chauffant et des bornes électriques (74, 76, 78 et 80) reliées à ce filament et en ce que les chambres de concentration/calcination et de vaporisation (12) comprennent chacune des alimentations électriques (50, 52, 56 et 58) prévues pour entrer en contact avec les bornes électriques de l'embase lorsque ladite embase est dans l'une ou l'autre des chambres.

3. Dispositif d'injection automatique selon la revendication 2, caractérisé en ce que les alimentations électriques (50, 52, 56 et 58) son réglables en puissance.

4. Dispositif d'injection automatique selon l'une quelconque des revendications précédentes, caractérisé en ce que la chambre de concentration/calcination (10) est orientée verticalement, de façon à recevoir à coulissement l'embase (28) soumise à la gravité et mobile entre une position haute et une position basse et en ce que cette chambre comprend également des moyens (73) de blocage/déblocage de l'embase (28) en position haute.

5. Dispositif d'injection automatique selon la revendication 4, caractérisé en ce que l'embase (28) comprend une enveloppe en fer doux et les moyens de blocage/déblocage de l'embase en position haute comprennent un électroaimant (73).

6. Dispositif d'injection automatique selon l'une quelconque des revendications précédentes, caractérisé en ce que le système de balayage (18) comprend un premier piquage d'entrée (96) de gaz débouchant dans la chambre de vaporisation (12) entre les chambres de concentration/calcination (10) et la colonne de chromatographie (14), un second piquage de sortie (98) de gaz débouchant hors de la chambre de concentration/calcination, ce second piquage comportant une première (100) et une seconde voies (106), la première voie (100) étant équipée d'un ajutage (102) et la seconde voie (106), à grand débit, étant équipée d'une électrovanne (108).

7. Dispositif d'injection automatique selon la revendication 6, caractérisé en ce que le second piquage (98) est situé immédiatement sous l'embase (28) lorsque celle-ci est en position haute.

8. Dispositif d'injection automatique selon l'une quelconque des revendications 2 à 7, caractérisé en ce que la chambre (10) de concentration/calcination comprend, en partie haute, un orifice (44) d'introduction d'une aiguille (48) de seringue, au-dessus de l'embase lorsque celle-ci est en position haute et en ce que l'embase (28) comprend un trou (72) débouchant, orienté verticalement, de façon à permettre le passage de l'aiguille (48) et autoriser l'accès au filament (82).

9. Dispositif d'injection automatique selon l'une quelconque des revendications précédentes, caractérisé en ce que les alimentations électriques (50, 52, 56 et 58) comprennent des éléments formant ressort travaillant à la compression.

10. Dispositif d'injection automatique selon l'une quelconque des revendications précédentes, caractérisé en ce que la chambre de concentration/calcination (210) comprend une platine supérieure (402) et une platine inférieure (404), deux embases supérieure (406) et inférieure (408), deux tubes supérieur (410) et inférieur (412), en matériau isolant, notamment en verre, deux électrodes métalliques supérieure (414) et inférieure (416), comprenant chacune deux suralésages (418, 420, 422, 424) prévus pour recevoir d'une part les tubes supérieur et inférieur (410, 412) et d'autre part un tube intermédiaire (426), également en matériau isolant transparent, notamment en verre.

## Patentansprüche

1. Vorrichtung zum automatischen Injizieren von Proben aus in einem Lösungsmittel gelösten oder verdünnten Produkten für eine gaschromatische Trennsäule, dadurch gekennzeichnet, daß sie eine Konzentrations-/Kalzinierkammer (10), eine Verdampfungskammer (12), die beide vertikal in Verbindung mit der chromatographischen Trennsäule (14) orientiert sind, einen Probenträger (16), der freibeweglich ohne mechanische Verbindung zwischen einer ersten Position, in der die Probe in der Konzentrations-/Kalzinierkammer ist, und einer zweiten Position, in der die Probe in der Verdampfungskammer ist, beweglich ist, ebenso wie ein System (18) zum Spülen der beiden Kammern durch einen Gasstrom, insbesondere durch Injektion des Gases zwischen die Konzentrations-/Kalzinierkammer und die Verdampfungskammer und durch Zirkulation oder durch Schließen oder Öffnen eines Ventils an der Verdampfungskammer umfaßt.

2. Automatische Injektionsvorrichtung nach Anspruch 1, dadurch gekennzeichnet, daß der Probenträger einen beweglichen Fuß (28), an dem ein Heizdraht (82) montiert ist, und elektrische Klemmen (74, 76, 78 und 80), die mit dem Draht verbunden sind, umfaßt und die Konzentrations-/Kalzinier- und Verdampfungskammern (10, 12) jeweils elektrische Versorgungen (50, 52, 56 und 58) enthalten, die vorgesehen sind, um mit den elektrischen Klemmen des Fußes in Kontakt zu treten, wenn der Fuß sich in der einen oder anderen der Kammern befindet.

3. Automatische Injektionsvorrichtung nach Anspruch 2, dadurch gekennzeichnet, daß die elektrischen Versorgungen (50, 52, 56 und 58) leistungsregelbar sind.

4. Automatische Injektionsvorrichtung nach einem der vorhergehenden Ansprüche, dadurch gekennzeichnet, daß die Konzentrations-/Kalzinierkammer (10) derart vertikal orientiert ist, daß sie den Fuß (28) unter Schwerkraft gleitend und zwischen einer oberen Position und einer unteren Position beweglich aufnimmt und daß diese Kammer auch Mittel (73) zum Blockieren/Deblockieren des Fußes (28) in oberer Position umfaßt.

5. Automatische Injektionsvorrichtung nach Anspruch 4, dadurch gekennzeichnet, daß der Fuß (28) eine Hülle aus Weicheisen umfaßt und die Mittel zum Blockieren/Deblockieren des Fußes in oberer Position einen Elektromagneten (73) umfassen.

6. Automatische Injektionsvorrichtung nach einem der vorhergehenden Ansprüche, dadurch gekennzeichnet, daß das System (18) zum Spülen einen ersten Zweiganschluß (96) zum Einführen von Gas in die Verdampfungskammer (12) zwischen den Konzentrations-/Kalzinierkammern (10) und der chromatographischen Säule (14), einen abzweigenden Gasaustritt (98) von der Konzentrations-/Kalzinierkammer ausgehend umfaßt, wobei der Austritt einen ersten (100) und einen zweiten Weg (106) umfaßt, wobei der erste Weg (100) einen Anschlußstutzen (102) und der zweite Weg (106) mit großem Durchtrittsquerschnitt mit einem Elektroventil (108) versehen ist.

7. Automatische Injektionsvorrichtung nach Anspruch 6, dadurch gekennzeichnet, daß der Ausgang (98) unmittelbar unter dem Fuß (28) angeordnet ist, wenn sich dieser in seiner oberen Position befindet.

8. Automatische Injektionsvorrichtung nach einem der Ansprüche 2 bis 7, dadurch gekennzeichnet, daß die Konzentrations-/Kalzinierkammer (10) im oberen Teil eine Einführöffnung (44) für eine Spritzennadel (48) oberhalb des Fußes aufweist, wenn sich dieser in seiner oberen Position befindet und daß der Fuß (28) eine Durchtrittsbohrung (72) umfaßt, die derart vertikal orientiert ist, daß sie den Durchgang der Nadel (48) und den Zugang zum Draht (82) ermöglicht.

9. Automatische Injektionsvorrichtung nach einem der vorhergehenden Ansprüche, dadurch gekennzeichnet, daß die elektrischen Versorgungen (50, 52, 56 und 58) Elemente umfassen, die Kompressionsfedern bilden.

10. Automatische Injektionsvorrichtung nach einem der vorhergehenden Ansprüche, dadurch gekennzeichnet, daß die Konzentrations-/Kalzinierkammer (210) eine obere Platte (402) und eine untere Platte (404), eine obere Fußplatte (406) und eine untere Fußplatte (408), ein oberes Rohr (410) und ein unteres Rohr (412) aus isolierendem Material, insbesondere Glas, eine obere und eine untere metallische Elektrode (414, 416), die jeweils zwei Überbohrungen (418, 420, 422, 424) zur Aufnahme einerseits des oberen und unteren Rohrs (410, 412) und andererseits eines Zwischenrohrs (426), das ebenfalls aus transparentem isolierendem Material, insbesondere Glas, besteht, versehen ist, umfaßt.

## Claims

1. Device for the automatic injection of samples of products which are made soluble or diluted in a solvent, for a gas chromatography analysis column (14),
characterised in that it comprises a concentration/calcination chamber (10) and a vaporisation chamber (12), both oriented vertically in connection with the chromatography column (14), a sample support (16), freely movable, without mechanical connection, between a first position in which the sample is in the concentration/calcination chamber and a second position in which the sample is in the vaporisation chamber, and a system (18) for scavenging the two chambers by means of a carrier gas, notably by injecting the said gas between the concentration/calcination chamber and the vaporisation chamber and by circulating or by closing or opening a valve in line with the vaporisation chamber.

2. Automatic injection device according to Claim 1, characterised in that the sample support comprises a movable socket (28) on which there are mounted a heating filament (82) and electrical terminals (74, 76, 78 and 80) connected to this filament and in that the concentration/calcination and vaporisation (12) chambers each comprise electrical supplies (50, 52, 56 and 58) designed to come into contact with the electrical terminals of the socket when the said socket is in one or other of the chambers.

3. Automatic injection device according to Claim 2, characterised in that the electrical supplies (50, 52, 56 and 58) can be adjusted for power.

4. Automatic injection device according to any one of the preceding claims, characterised in that the concentration/calcination chamber (10) is oriented vertically, so as to slidably receive the socket (28) subjected to gravity and movable between a high position and a low position and in that this chamber also comprises means (73) for locking/releasing the socket (28) in the high position.

5. Automatic injection device according to Claim 4, characterised in that the socket (28) comprises a soft-iron enclosure and the means of locking/releasing the socket in the high position comprise an electromagnet (73).

6. Automatic injection device according to any one of the preceding claims, characterised in that the scavenging system (18) comprises a first gas inlet tapping (96) opening out into the vaporisation chamber (12) between the concentration/calcination chambers (10) and the chromatography column (14), a second gas outlet tapping (98) opening outside the concentration/calcination chamber, this second tapping having first (100) and second (106) channels, the first channel (100) being equipped with a nozzle (102) and the second channel (106), with a high flow rate, being equipped with a solenoid valve (108).

7. Automatic injection device according to Claim 6, characterised in that the second tapping (98) is situated immediately below the socket (28) when the latter is in the high position.

8. Automatic injection device according to any one of Claims 2 to 7, characterised in that the concentration/calcination chamber (10) comprises, in the upper part, an orifice (44) for inserting a syringe needle (48), above the socket when the latter is in the high position, and in that the socket (28) comprises a vertically oriented through hole (72) so as to allow the needle (48) to pass and afford access to the filament (82).

9. Automatic injection device according to any one of the preceding claims, characterised in that the electrical supplies (50, 52, 56 and 58) comprise elements forming a spring working under compression.

10. Automatic injection device according to any one of the preceding claims, characterised in that the concentration/calcination chamber (210) comprises a top plate (402) and a bottom plate (404), two top (406) and bottom (408) sockets, two top (410) and bottom (412) tubes, made from insulating material, notably glass, two top (414) and bottom (416) metallic electrodes, each comprising two bores (418, 420, 422, 424) designed to receive on the one hand the top and bottom tubes (410, 412) and on the other hand an intermediate tube (426), also made from transparent insulating material, notably glass.
